# EUROPÄISCHE PATENTSCHRIFT

(11) **EP 1 664 838 B1**
(45) Veröffentlichungstag und Bekanntmachung des Hinweises auf die Patenterteilung: **29.10.2014**
(21) Anmeldenummer: 04740809.1
(22) Anmeldetag: 08.07.2004
(51) Int. Cl.: G01S 13/93, B60Q 1/48

(54) **VERFAHREN UND COMPUTERPROGRAMM ZUM ERFASSEN DER KONTUR EINES HINDERNISSES IN DER UMGEBUNG EINES FAHRZEUGS**
METHOD AND COMPUTER PROGRAM FOR THE DETECTION OF THE CONTOUR OF AN OBSTACLE IN THE SURROUNDINGS OF A VEHICLE
PROCEDE ET PROGRAMME INFORMATIQUE POUR DETECTER LE CONTOUR D'UN OBSTACLE DANS L'ENVIRONNEMENT D'UN VEHICULE

(30) Priorität: 12.09.2003 DE 10343331
(43) Veröffentlichungstag der Anmeldung: 07.06.2006
(73) Patentinhaber: Valeo Schalter und Sensoren GmbH, 74321 Bietigheim-Bissingen (DE)
(72) Erfinder: JECKER, Nicolas, 73728 Esslingen (DE); GOTZIG, Heinrich, 74081 Heilbronn (DE)
(86) Internationale Anmeldenummer: PCT/EP2004/007507
(87) Internationale Veröffentlichungsnummer: WO 2005/033736

(56) Entgegenhaltungen:
- EP-A- 0 783 114
- EP-A- 1 333 296
- WO-A-2004/042423
- DE-A- 10 146 712
- US-A1- 2002 169 537
- PATENT ABSTRACTS OF JAPAN Bd. 0184, Nr. 24 (M-1652), 9. August 1994 (1994-08-09) & JP 6 127318 A (NISSAN MOTOR CO LTD), 10. Mai 1994 (1994-05-10)

## Beschreibung

Die Erfindung betrifft ein Verfahren und ein Computerprogramm zum Erfassen der Kontur eines Hindernisses in der Umgebung eines fahrenden Fahrzeugs durch eine vorzugsweise in einem Seitenbereich des Fahrzeugs angeordnete Sensoreinrichtung. Darüber hinaus betrifft die Erfindung ein Computerprogramm und eine Parklückenerkennungsvorrichtung zum Durchführen dieses Verfahrens.

Aus der DE 101 149 32 A1 ist ein dreidimensionales Umfelderfassungssystem bekannt geworden, bei dem während der Bewegung des Fahrzeugs Tiefenprofile erstellt werden, welche kombiniert zu einem dreidimensionalen Abbild der Umgebung führen.

Aus der EP 1 333 296 A1 ist ein Abstandsbestimmungsverfahren eines Fahrzeugs bekannt geworden, bei dem die Position und die Form von zwei eine Parklücke begrenzenden Fahrzeugen zeitgleich während des Vorbeifahrens des Fahrzeugs bestimmt werden.

Aus der EP 0 783 114 A1 ist ein Parklückenerkennungssystem bekannt, wobei Entfernungsmesser auf einer Fahrzeugseite angeordnet sind und wobei von zwei Sensoren gleichzeitig Distanzwerte ermittelt werden, wobei mit den ermittelten Distanzwerten die Größe einer Parklücke berechnet wird.

Aus dem Stand der Technik, insbesondere aus der DE 101 46 712 A1, ist eine Einparkhilfe für Kraftfahrzeuge bekannt. Sie umfasst zwei Abstandssensoren, die zwei Sensorsignale unterschiedlicher Strahlgeometrie liefern und zusammen eine Richtcharakteristik mit einer Kreuzkeule erzeugen. Diese Sensoreinrichtungen sind vorzugsweise im Seitenbereich eines Kraftfahrzeugs angeordnet. Bei der Kreuzkeulenkonfiguration besitzt einer der Sensoren in horizontaler Richtung eine breite und in vertikaler Richtung eine schmale Strahlkeule. Während einer Vorbeifahrt des Fahrzeugs an einem Hindernis werden deshalb mindestens folgende Schritte ausgeführt:
Aussenden eines ersten Sensorsignals durch die Sensoreinrichtung in eine Richtung mit einem Richtungsanteil, welcher in Fahrtrichtung des Fahrzeugs liegt, wenn sich das Hindernis gegenüber dem Fahrzeug in Fahrtrichtung voraus befindet;
Empfangen von zumindest einem Teil des ersten Sensorsignals nach dessen Reflexion an dem Hindernis in Form eines ersten Reflexionssignals, welches eine erste Position und einen ersten Verlauf für die Kontur des Hindernisses repräsentiert;
Aussenden eines zweiten Sensorsignals durch die Sensoreinrichtung in eine Richtung mit einem Richtungsanteil, welcher entgegen der Fahrtrichtung des Fahrzeugs liegt, wenn das Fahrzeug bereits an dem Hindernis vorbeigefahren ist;
Empfangen von zumindest einem Teil des zweiten Sensorsignals nach dessen Reflexion an dem Hindernis in Form eines zweiten Reflexionssignals, welches eine zweite Position und einen zweiten Verlauf für die Kontur des Hindernisses repräsentiert; und
Aussenden eines dritten Sensorsignals durch die Sensoreinrichtung in eine Richtung im Wesentlichen senkrecht zur Fahrtrichtung, wenn sich das vorbeifahrende Fahrzeug auf Höhe des Hindernisses befindet; und
Empfangen von zumindest einem Teil des dritten Sensorsignals nach dessen Reflexion an dem Hindernis in Form eines dritten Reflexionssignals, welches eine dritte Position und einen dritten Verlauf für die Kontur des Hindernisses repräsentiert.

In der DE 101 46 712 werden insbesondere die Amplituden der Reflexionssignale der beiden Sensoreinrichtungen ausgewertet, wie sie bei einer Vorbeifahrt des Fahrzeugs an dem Hindernis empfangen werden. Deren Auswertung lässt dann auf die Position und den Verlauf der Kontur des Hindernisses schließen.

Ausgehend von diesem Stand der Technik ist es die Aufgabe der Erfindung, ein bekanntes Verfahren und Computerprogramm, sowie eine bekannte Parklückenerkennungsvorrichtung zum Erfassen der Kontur eines Hindernisses in der Umgebung eines fahrenden Fahrzeugs dahingehend weiterzubilden, dass die Position und/oder der Verlauf der Kontur des Hindernisses präziser erkannt werden können.

Diese Aufgabe wird durch das in Patentanspruch 1 beanspruchte Verfahren gelöst. Genauer gesagt, erfolgt die Lösung für das einleitend beschriebene Verfahren in folgenden kennzeichnenden Schritten: Generieren eines gemittelten Reflexionssignals durch mathematische, vorzugsweise arithmetische, Mittelung von mindestens zweien der Reflexionssignale und durch Auswerten des gemittelten Reflexionssignals im Hinblick auf die tatsächliche Position und den tatsächlichen Verlauf der Kontur des Hindernisses.

Jedes einzelne der Reflexionssignale liefert seinerseits bereits grobe Anhaltswerte für die Position und den Verlauf der Kontur des Hindernisses. Die Positions- und Verlaufsangaben, die die einzelnen Reflexionssignale liefern, stellen jedoch nur grobe Anhaltspunkte für die tatsächliche Position und den tatsächlichen Verlauf dar; sie stimmen in der Regel nicht exakt mit diesen überein. Die beanspruchte mathematische Mittelung von mindestens zweien der Reflexionssignale liefert dagegen bereits eine Information mit vorteilhafterweise wesentlich verbesserter Genauigkeit im Hinblick auf die tatsächliche Position und/oder den tatsächlichen Verlauf der Kontur des Hindernisses. Die Auswahl der mindestens zwei in die Mittelung einfließenden Reflexionssignale ist grundsätzlich beliebig. Es ist jedoch empfehlenswert, auf jeden Fall das dritte Reflexionssignal bei der Mittelung zu berücksichtigen, weil dieses von sich aus bereits einen recht präzisen Rückschluss auf die tatsächliche Position und den tatsächlichen Verlauf der Kontur des Hindernisses zulässt.

Eine weitere Präzisierung kann durch eine geeignete Gewichtung der in die mathematische Mittelung eingehenden Reflexionssignale erzielt werden.

Das erste und das zweite, gegebenenfalls auch das dritte, Sensorsignal liegen grundsätzlich in einer Ebene. Mit dem beanspruchten Verfahren werden dann nur Hindernisse erfasst, welche von der Ebene geschnitten werden. Um einen in der Vertikalen möglicherweise veränderten Konturverlauf des Hindernisses zu detektieren, ist es vorteilhaft, wenn die Detektionsebene bezüglich ihres Winkels zu einer fiktiven vertikalen Ebene in Fahrtrichtung des Fahrzeugs und senkrecht zu der Straßenoberfläche, auf welcher sich das Fahrzeug bewegt, geneigt werden kann.

Vorteilhafterweise eignet sich das erfindungsgemäße Verfahren sowohl für Radar-, Ultraschall- oder Laserlichtsignale.

Weitere vorteilhafte Ausgestaltungen des Verfahrens sind Gegenstand der Unteransprüche.

Die oben genannte Aufgabe des Verfahrens wird weiterhin durch ein Computerprogramm und eine Parklückenerkennungsvorrichtung zum Durchführen des beanspruchten Verfahrens gelöst. Die Vorteile dieser Lösungen entsprechen den oben mit Bezug auf das beanspruchte Verfahren genannten Vorteilen.

Der Beschreibung sind insgesamt acht Figuren beigefügt, wobei
- Figur 1: ein Hindernis im Detektionsbereich einer Sensoreinrichtung mit horizontaler Abstrahlcharakteristik, eingebaut in ein vorbeifahrendes Fahrzeug;
- Figur 2a: verschiedene Beispiele für den Konturverlauf eines Hindernisses, wie er aus unterschiedlichen Reflexionssignalen ermittelt werden würde;
- Figur 2b: den tatsächlichen Konturverlauf des Hindernisses im Vergleich zu dem Verlauf des Hindernisses aufgrund einer Auswertung eines erfindungsgemäß gemittelten Reflexionssignals;
- Figur 3a: ein an einem ersten Hindernis vorbeifahrendes Fahrzeug mit einer Sensoreinrichtung, die in verschiedenen Ebenen ausstrahlt;
- Figur 3b: ein an einem zweiten Hindernis vorbeifahrendes Fahrzeug mit einer Sensoreinrichtung, die in verschiedenen Ebenen ausstrahlt;
- Figur 4a: die Vorbeifahrt eines Fahrzeugs an einem in vertikaler Richtung gestuften Hindernis;
- Figur 4b: gemittelte Reflexionssignale, wie sie sich bei der Vorbeifahrt an dem in Figur 4a gezeigten Hindernis ergeben; und
- Figur 4c: eine Rekonstruktion des in Figur 4a gezeigten, in vertikaler Richtung gestuften, Konturverlaufs des Hindernisses
zeigt.

Die Erfindung wird nachfolgend anhand verschiedener Ausführungsbeispiele unter Bezugnahme auf die genannten Figuren detailliert beschrieben.

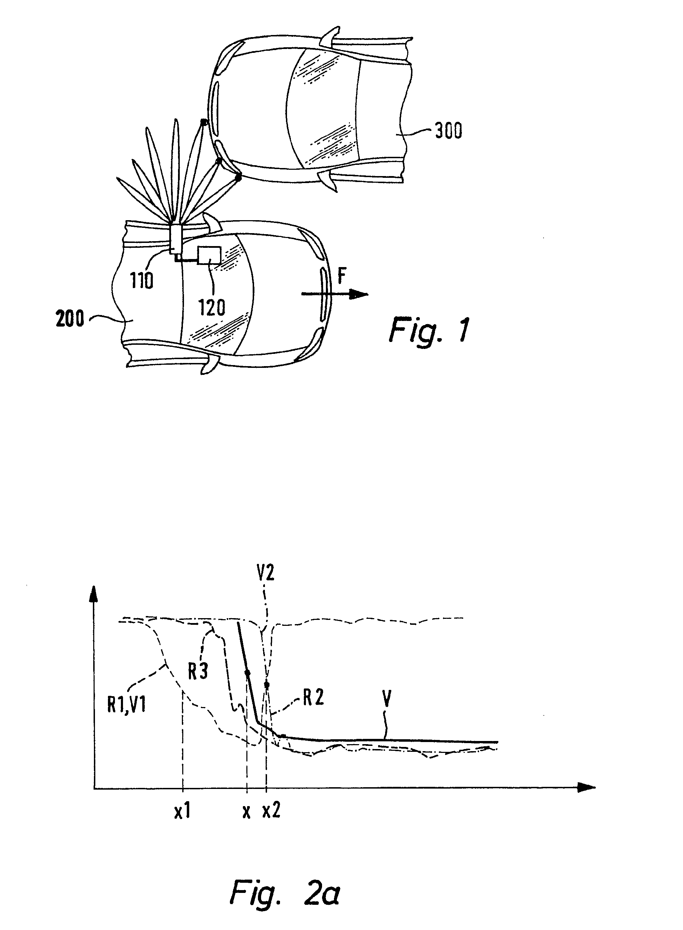

Figur 1 zeigt eine Ausgangssituation zur Durchführung der vorliegenden Erfindung. Dabei handelt es sich um die Vorbeifahrt eines Fahrzeugs 200 in Fahrtrichtung F an einem Hindernis 300, insbesondere einem parkenden Fahrzeug. In einen Seitenbereich des vorbeifahrenden Fahrzeugs 200 ist eine Parklückenerkennungsvorrichtung eingebaut, welche eine Sensoreinrichtung 110 zum Aussenden von Sensorsignalen und zum Empfangen von Reflexionssignalen sowie eine Auswerteeinrichtung 120 zum Auswerten der Reflexionssignale aufweist.

Gemäß der Erfindung funktioniert diese Parklückenerkennungsvorrichtung wie folgt: Insbesondere solange sich das Hindernis 300 gegenüber dem Fahrzeug 200 noch in Fahrtrichtung F vorausbefindet, wird mindestens ein erstes Sensorsignal durch die Sensoreinrichtung 110 mit einem Richtungsanteil, welcher in Fahrtrichtung F des Fahrzeugs liegt, auf das Hindernis 300 hin ausgesendet. Nachfolgend wird zumindest ein Teil dieses ersten Sensorsignals nach dessen Reflexion an dem Hindernis 300 in Form eines ersten Reflexionssignals wiederum von der Sensoreinrichtung 110 empfangen. Das erste Sensorsignal repräsentiert eine erste Position x1 und einen ersten Verlauf V1 für die Kontur des tatsächlichen Hindernisses 300.

Wenn das Fahrzeug bereits an dem Hindernis vorbeigefahren ist, sendet die Sensoreinrichtung 110 ein zweites Sensorsignal in Richtung auf das Hindernis 300 aus, dann mit einem Richtungsanteil, welcher entgegengesetzt zu der Fahrtrichtung des Fahrzeugs 200 liegt. Zumindest ein Teil dieses zweiten Sensorsignals wird dann nach dessen Reflexion an dem Hindernis 300 in Form eines zweiten Reflexionssignals wiederum von der Sensoreinrichtung 110 empfangen. Das zweite Reflexionssignal R2 repräsentiert dabei eine zweite Position x2 und einen zweiten Verlauf V2 für die Kontur des Hindernisses 300. Weil beide durch die beiden Reflexionssignale repräsentierten Positionen x1 und x2 und die beiden Konturverläufe V1 und V2 für sich alleine betrachtet, die tatsächlichen Verhältnisse nur unzureichend repräsentieren, werden sie erfindungsgemäß mathematisch, vorzugsweise arithmetisch, gemittelt.

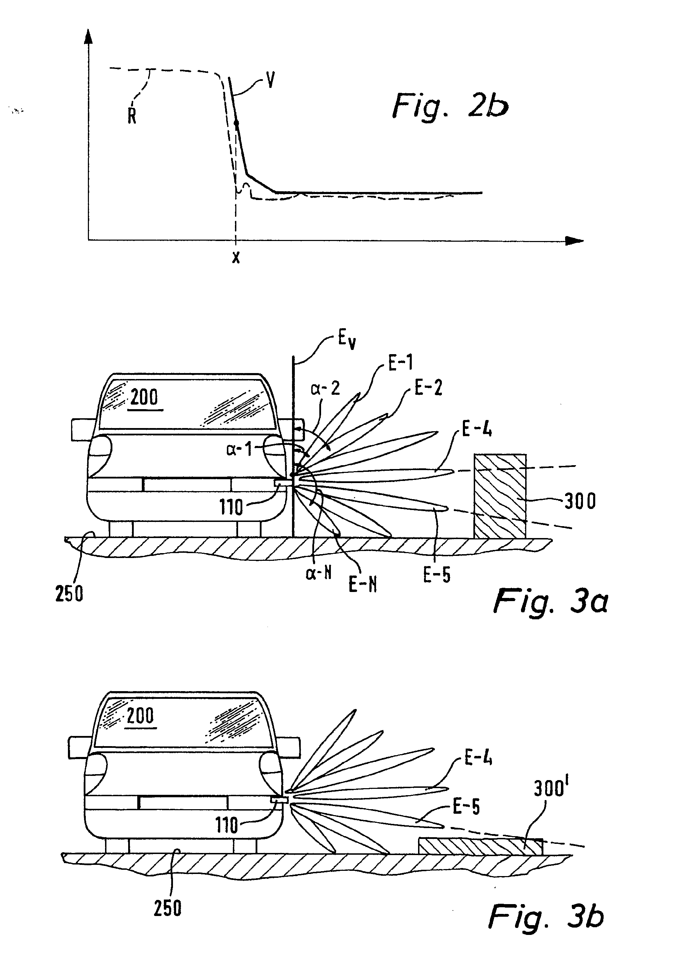

Das auf diese Weise gewonnene, gemittelte Reflexionssignal R repräsentiert die tatsächliche Position x und den tatsächlichen Verlauf V der Kontur des Hindernisses 300 wesentlich besser als die aus dem ersten oder zweiten Reflexionssignal alleine gewonnenen Werte. Dies ist in Figur 2b veranschaulicht, wo die gestrichelte, schwarze Linie den durch das gemittelte Reflexionssignal R repräsentierten Konturverlauf und die durchgezogene, schwarze Linie die tatsächliche Position und den tatsächlichen Verlauf der Kontur des Hindernisses 300 zeigen.

Eine weitere, wesentliche Verbesserung im Hinblick auf die tatsächliche Position x und den tatsächlichen Konturverlauf V des Hindernisses kann dadurch erzielt werden, dass, neben dem ersten und dem zweiten Reflexionssignal, auch ein drittes Reflexionssignal R3 in die Mittelung miteinbezogen wird. Das dritte Reflexionssignal setzt voraus, dass ein drittes Sensorsignal durch die Sensoreinrichtung 110 in eine Richtung im Wesentlichen senkrecht zur Fahrtrichtung F auf das Hindernis 300 hin ausgesendet wird, wenn sich das Fahrzeug auf Höhe des Hindernisses 300 befindet. Das dritte Reflexionssignal R3 repräsentiert dann zumindest einen Teil dieses dritten Sensorsignals nach dessen Reflexion an dem Hindernis 300. Das dritte Reflexionssignal R3 geht vorzugsweise mit einem höheren Gewichtungsfaktor als das erste und zweite Reflexionssignal in die Mittelung ein, weil es erfahrungsgemäß im Vergleich zu dem ersten und zweiten Sensorsignal die realistischeren Informationen über die Position und den Konturverlauf des Hindernisses 300 repräsentiert. Das erste und das zweite Reflexionssignal gehen vorzugsweise mit einer gleichen Gewichtung in die Mittelung ein.

Wie oben beschrieben, ist es Voraussetzung für die vorliegende Erfindung, dass das Hindernis 300 sowohl dann im Detektionsbereich der Sensoreinrichtung 110 liegt, wenn es relativ zu dem Fahrzeug 200 in Fahrtrichtung voraus liegt, wie auch, wenn das Fahrzeug 200 bereits an ihm vorbeigefahren ist. Das erste und das zweite und vorzugsweise auch das dritte Sensorsignal, beziehungsweise Reflexionssignal, können deshalb im Wesentlichen als in einer Ebene liegend betrachtet werden, wie dies in Figur 1 angedeutet ist.

In Figur 3a sind verschiedene Winkelpositionen dieser Ebene im Profil gezeigt. Alle die dort gezeigten möglichen Winkelebenen E-1...-N unterscheiden sich in ihrer Lage zueinander durch einen unterschiedlichen Winkel α-1...-N zu einer fiktiven vertikalen Ebene Eᵥ, welche in Fahrtrichtung des Fahrzeugs 200 und senkrecht zu einer Straßenoberfläche 250 aufgespannt ist, auf welcher sich das Fahrzeug bewegt. Ist die Parklückenerkennungsvorrichtung so ausgebildet, dass sie die Sensorsignale lediglich in einer dieser Ebenen E-1...-N aussendet, so werden durch das erfindungsgemäße Verfahren auch jeweils lediglich solche Hindernisse 300 erfasst, welche von der jeweiligen Ebene geschnitten werden. In Figur 3a wird das Hindernis 300 zum Beispiel von den Ebenen E-4 und E-5 geschnitten. Im Unterschied dazu würde das in Figur 3b gezeigte Hindernis 300' mit geringerer Höhe bei einer Ausrichtung der Sensoreinrichtung in der Ebene E-4 nicht mehr erfasst, wohl aber bei einer Ausrichtung in der Ebene E-5.

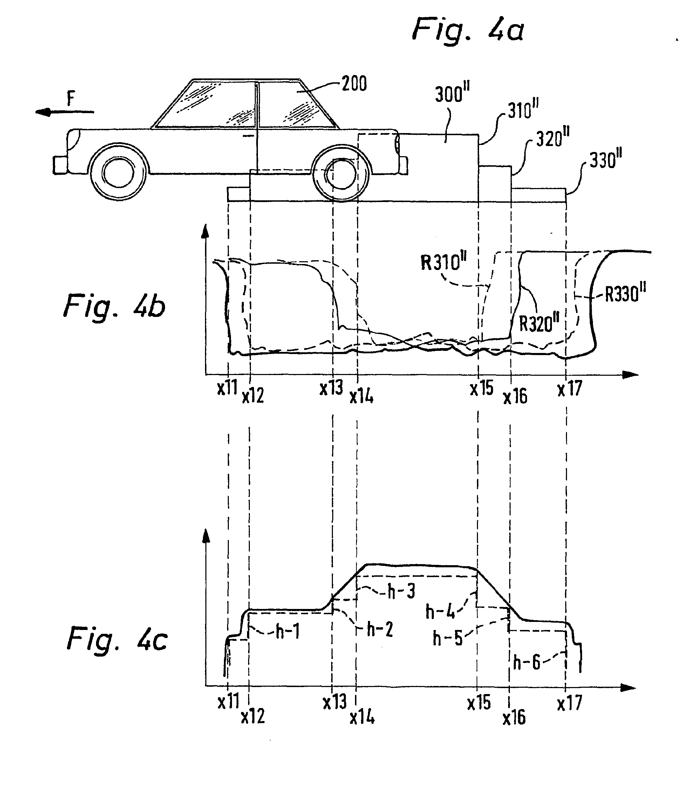

Um auch Hindernisse 300 unterschiedlicher Höhe präzise erfassen zu können, ist es vorteilhaft, wenn die Sensorenrichtung 110 ausgebildet ist, die Sensorsignale nicht nur in einer Ebene, sondern in mehreren Ebenen E-1...-N auszusenden. Dies kann zeitlich versetzt oder zeitgleich erfolgen. Bei einer Vorbeifahrt des Fahrzeugs 200 in Fahrtrichtung F an dem gestuften Hindernis 300'' gemäß Figur 4a ist es mit einer dreidimensional ausstrahlenden Sensoreinrichtung 110 möglich, den gestuften Konturverlauf des Hindernisses 300" mit den jeweiligen Positionen der Konturen zu erfassen. Bei Anwendung des erfindungsgemäßen Verfahrens werden dann für jede Flanke 310'', 320" und 330" des gestuften Hindernisses 300'' jeweils mehrere Reflexionssignale, insbesondere das erste, das zweite und das dritte Reflexionssignal empfangen und dann anschließend gemäß dem erfindungsgemäßen Verfahren gemittelt. Die gemittelten Reflexionssignale R310", R320", R330" repräsentieren bereits in guter Näherung die tatsächlichen Positionen x11... bis x17 der Flanken des gestuften Hindernisses 300". Die in Figur 4b gezeigten Verläufe der gemittelten Reflexionssignale ergeben sich bei Ausstrahlung des ersten, zweiten und/oder des dritten Sensorsignals in jeweils einer unterschiedlichen Ebene E-1...-N. Durch Auswerten der Winkelinformationen α-1...-N, um welche sich die gemäß Figur 4b ausgewerteten Ebenen in ihrer Lage unterscheiden, ist es möglich, zusätzlich zu den Abständen x11...x17 auch die Kontur des gestuften Hindernisses 300'' in der Vertikalen zu rekonstruieren. Auf diese Weise sind insbesondere die Höhen h1...-6 des Hindernisses 300" rekonstruierbar.

Die Sensoreinrichtung 110 zur Durchführung des erfindungsgemäßen Verfahrens muss zumindest ausgebildet sein, Sensorsignale in einer der Ebenen E-1...-N auszusenden. Darüber hinaus ist es vorteilhaft, wenn sie die Sensorsignale auch in der dritten Dimension, repräsentiert durch die Winkel α-1...N, aussenden kann. Dafür ist sie vorzugsweise als Multibeam- oder als Scanner-System ausgebildet.

Das erfindungsgemäße Verfahren wird vorzugsweise in Form eines Computerprogramms realisiert. Das Computerprogramm ist dann, gegebenenfalls zusammen mit weiteren Computerprogrammen, für eine Parklückenerkennungsvorrichtung auf einem Computer lesbaren Datenträger abgespeichert. Bei dem Datenträger kann es sich um eine Diskette, eine Compact-Disc, einen sogenannten Flash-Memory oder dergleichen handeln. Das auf dem Datenträger abgespeicherte Computerprogramm kann dann als Produkt an einen Kunden übertragen und verkauft werden. Auch ohne physikalischen Datenträger kann das Computerprogramm zum Beispiel über ein Kommunikationsnetzwerk, insbesondere das Internet, an einen Kunden übertragen und verkauft werden.

## Patentansprüche

1. Verfahren zum Erfassen der Kontur eines Hindernisses (330) in der Umgebung eines fahrendes Fahrzeugs (200) durch eine vorzugsweise in den Seitenbereich des Fahrzeugs eingebaute Sensoreinrichtung (110), umfassend die Schritte:
a1) Aussenden eines ersten Sensorsignals durch die Sensoreinrichtung (110) in eine Richtung mit einem Richtungsanteil, welcher in Fahrtrichtung des Fahrzeugs (200) liegt, wenn sich das Hindernis gegenüber dem Fahrzeug in Fahrtrichtung (F) vorausbefindet;
a2) Empfangen von zumindest einem Teil des ersten Sensorsignals nach dessen Reflexion an dem Hindernis (300) in Form eines ersten Reflexionssignals, welches eine erste Position (x1) und einen ersten Verlauf (V1) für die Kontur des Hindernisses repräsentiert;
b1) Aussenden eines zweiten Sensorsignals durch die Sensoreinrichtung (110) in eine Richtung mit einem Richtungsanteil, welcher entgegen der Fahrtrichtung (F) des Fahrzeugs (200) liegt, wenn das Fahrzeug bereits an dem Hindernis (300) vorbeigefahren ist; und
b2) Empfangen von zumindest einem Teil des zweiten Sensorsignals nach dessen Reflexion an dem Hindernis (300) in Form eines zweiten Reflexionssignals, welches eine zweite Position (x2) und einen zweiten Verlauf (V2) für die Kontur des Hindernisses (300) repräsentiert,
**gekennzeichnet durch**
d) Generieren eines gemittelten Reflexionssignals **durch** mathematische, vorzugsweise arithmetische, Mittelung von mindestens zweien der Reflexionssignale; und
e) Auswerten des gemittelten Reflexionssignals im Hinblick auf die tatsächliche Position (x) und den tatsächlichen Verlauf (V) der Kontur des Hindernisses (300).

2. Verfahren nach Anspruch 1, **dadurch gekennzeichnet**, vorsehend zusätzlich folgende Verfahrensschritte nach den Schritten a) und b) und vor den Schritten d) und e):
c1) Aussenden eines dritten Sensorsignals durch die Sensoreinrichtung (110) in eine Richtung im Wesentlichen senkrecht zur Fahrtrichtung, wenn sich das vorbeifahrende Fahrzeug (200) auf Höhe des Hindernisses (300) befindet; und
c2) Empfangen von zumindest einem Teil des dritten Sensorsignals nach dessen Reflexion an dem Hindernis (300) in Form eines dritten Reflexionssignals, welches eine dritte Position und einen dritten Verlauf für die Kontur des Hindernisses (300) repräsentiert.

3. Verfahren nach Anspruch 2, **dadurch gekennzeichnet, dass** das erste, zweite und/oder dritte Reflexionssignal mit individuellen Gewichtungsfaktoren bei der Mittelung gemäß Verfahrensschritt d) berücksichtigt werden, wobei das dritte Reflexionssignal vorzugsweise stärker als das erste und das zweite Reflexionssignal, welche vorzugsweise betraglich gleich gewichtet werden, gewichtet wird.

4. Verfahren nach einem der vorangegangenen Ansprüche, **dadurch gekennzeichnet, dass** das erste, zweite und dritte Reflexionssignal im Wesentlichen in einer Ebene (E-1...N) liegen.

5. Verfahren nach Anspruch 3, **dadurch gekennzeichnet, dass** das Verfahren für unterschiedliche Winkelpositionen (α-1...-N) der Ebene (E-1...N) gegenüber einer vertikalen Ebene (Eᵥ) in Fahrzeuglängsrichtung wiederholt wird.

6. Verfahren nach einem der vorangegangenen Ansprüche, **dadurch gekennzeichnet, dass** es sich bei den Sensorsignalen um Radarsignale, Ultraschall oder Laserlichtsignale handelt.

7. Computerprogramm mit Programmcode für insbesondere eine Parklückenerkennungsvorrichtung **dadurch gekennzeichnet, daß** das Computerprogramm ausgebildet ist zur Durchführung des Verfahrens nach einem der Ansprüche 1 bis 6.

8. Parklückenerkennungsvorrichtung für ein Fahrzeug (200) zum Erfassen der Kontur eines Hindernisses (300) in der Umgebung des Fahrzeugs (200) während dessen Fahrt, umfassend:
eine Sensoreinrichtung (110) zum Aussenden von Sensorsignalen und Empfangen von Reflexionssignalen; und
eine Auswerteeinrichtung (120) zum Auswerten der Reflexionssignale im Hinblick auf die tatsächliche Position und den tatsächlichen Verlauf der Korrektur des Hindernisses (300);
wobei die Sensoreinrichtung (110) und die Auswerteeinrichtung (120) ausgebildet sind zur Durchführung des in mindestens einem der Ansprüche 1 bis 6 beanspruchten Verfahrens.

## Claims

1. Method for detecting the contour of an obstacle (300) in the surroundings of a travelling vehicle (200) by means of a sensor device (110) which is preferably installed in the side area of the vehicle, comprising the following steps:
a1) the sensor device (110) emits a first sensor signal in a direction with a direction component which is in the direction of travel of the vehicle (200) when the obstacle is in front of the vehicle in the direction of travel (F);
a2) at least part of the first sensor signal is received, after it has been reflected at the obstacle (300), in the form of a first reflection signal which represents a first position (x1) and a first profile (V1) for the contour of the obstacle;
b1) the sensor device (110) emits a second sensor signal in a direction with a direction component which is counter to the direction of travel (F) of the vehicle (200) when the vehicle has already travelled past the obstacle (300); and
b2) at least part of the second sensor signal is received, after it has been reflected at the obstacle (300), in the form of a second reflection signal which represents a second position (x2) and a second profile (V2) for the contour of the obstacle (300),
**characterized by**
d) the generation of an averaged reflection signal by mathematically, preferably arithmetically, averaging at least two of the reflection signals; and
e) the evaluation of the averaged reflection signal with regard to the actual position (x) and the actual profile (V) of the contour of the obstacle (300).

2. Method according to Claim 1, **characterized in that** the following method steps are additionally provided after steps a) and b) and before steps d) and e):
c1) the sensor device (110) emits a third sensor signal in a direction substantially perpendicular to the direction of travel when the vehicle (200) travelling past is at the height of the obstacle (300); and
c2) at least part of the third sensor signal is received, after it has been reflected at the obstacle (300), in the form of a third reflection signal which represents a third position and a third profile for the contour of the obstacle (300).

3. Method according to Claim 2, **characterized in that** the first, second and/or third reflection signals are taken into account with individual weighting factors during the averaging according to method step d), the third reflection signal preferably being given a higher weighting than the first and second reflection signals which are preferably weighted equally in terms of magnitude.

4. Method according to one of the preceding claims, **characterized in that** the first, second and third reflection signals are substantially in one plane (E-1...N).

5. Method according to Claim 3, **characterized in that** the method is repeated for different angular positions (α-1...-N) of the plane (E-1...N) with respect to a vertical plane (Eᵥ) in the longitudinal direction of the vehicle.

6. Method according to one of the preceding claims, **characterized in that** the sensor signals are radar signals, ultrasound or laser light signals.

7. Computer program with program code for a parking space detection apparatus in particular, **characterized in that** the computer program is designed to carry out the method according to one of Claims 1 to 6.

8. Parking space detection apparatus for a vehicle (200) for detecting the contour of an obstacle (300) in the surroundings of the vehicle (200) during its travel, comprising:
a sensor device (110) for emitting sensor signals and receiving reflection signals; and
an evaluation device (120) for evaluating the reflection signals with respect to the actual position and the actual profile of the contour of the obstacle (300);
the sensor device (110) and the evaluation device (120) being designed to carry out the method claimed in at least one of Claims 1 to 6.

## Revendications

1. Procédé pour détecter le contour d'un obstacle (300) dans l'environnement d'un véhicule (200) en déplacement par un dispositif de détection (110) installé de préférence dans la zone latérale du véhicule, comprenant les étapes suivantes :
a1) émission d'un premier signal de détecteur par le dispositif de détection (110) dans une direction avec une composante de direction qui se trouve dans le sens de la marche du véhicule (200), lorsque l'obstacle se trouve à l'avant par rapport au véhicule dans le sens de la marche (F) ;
a2) réception d'au moins une partie du premier signal de détecteur après sa réflexion sur l'obstacle (300) sous la forme d'un premier signal de réflexion qui représente une première position (x1) et un premier tracé (V1) pour le contour de l'obstacle ;
b1) émission d'un deuxième signal de détecteur par le dispositif de détection (110) dans une direction avec une composante de direction qui est à l'opposé du sens de la marche (F) du véhicule (200), lorsque le véhicule est déjà passé à côté de l'obstacle (300) ; et
b2) réception d'au moins une partie du deuxième signal de détecteur après sa réflexion sur l'obstacle (300) sous la forme d'un deuxième signal de réflexion qui représente une deuxième position (x2) et un deuxième tracé (V2) pour le contour de l'obstacle (300),
**caractérisé par**
d) la génération d'un signal de réflexion moyen, obtenu par calcul de la moyenne mathématique, de préférence arithmétique, d'au moins deux des signaux de réflexion ; et
e) l'interprétation du signal de réflexion moyen dans la perspective de la position réelle (x) et du tracé réel (V) du contour de l'obstacle (300).

2. Procédé selon la revendication 1, **caractérisé en ce que** les étapes de procédé suivantes sont prévues en plus après les étapes a) et b) et avant les étapes d) et e) :
c1) émission d'un troisième signal de détecteur par le dispositif de détection (110) dans une direction sensiblement perpendiculaire au sens de la marche lorsque le véhicule (200) passant se trouve à la hauteur de l'obstacle (300) ; et
c2) réception d'au moins une partie du troisième signal de détecteur après sa réflexion sur l'obstacle (300) sous la forme d'un troisième signal de réflexion qui représente une troisième position et un troisième tracé pour le contour de l'obstacle (300).

3. Procédé selon la revendication 2, **caractérisé en ce que** le premier, le deuxième et/ou le troisième signal de réflexion sont pris en compte avec des facteurs de pondération individuels lors du calcul de la moyenne selon l'étape de procédé d), le troisième signal de réflexion étant de préférence pondéré avec un poids supérieur à celui des premier et deuxième signaux de réflexion, lesquels sont de préférence pondérés avec un poids identique.

4. Procédé selon l'une des revendications précédentes, **caractérisé en ce que** le premier, le deuxième et le troisième signal de réflexion se trouvent sensiblement dans un plan (E-1...N).

5. Procédé selon la revendication 3, **caractérisé en ce que** le procédé est répété pour différentes positions angulaires (α-1...-N) du plan (E-1...N) par rapport à un plan vertical (Eᵥ) dans le sens longitudinal du véhicule.

6. Procédé selon l'une des revendications précédentes, **caractérisé en ce que** les signaux de détecteur sont des signaux radar, des ultrasons ou des signaux lumineux laser.

7. Programme informatique avec code de programme, notamment pour un dispositif de reconnaissance d'emplacement de stationnement, **caractérisé en ce que** le programme informatique est configuré pour mettre en oeuvre le procédé selon l'une des revendications 1 à 6.

8. Dispositif de reconnaissance d'emplacement de stationnement pour un véhicule (200) destiné à détecter le contour d'un obstacle (300) dans l'environnement du véhicule (200) pendant son déplacement, comprenant :
un dispositif de détection (110) pour émettre des signaux de détecteur et recevoir des signaux de réflexion ; et
un dispositif d'interprétation (120) pour l'interprétation des signaux de réflexion dans la perspective de la position réelle et du tracé réel du contour de l'obstacle (300) ;
le dispositif de détection (110) et le dispositif d'interprétation (120) étant configurés pour mettre en oeuvre le procédé revendiqué selon au moins l'une des revendications 1 à 6.
